# EUROPÄISCHE PATENTANMELDUNG

(11) **EP 0 858 939 A1**
(43) Veröffentlichungstag der Anmeldung: **19.08.1998**
(21) Anmeldenummer: 98102218.9
(22) Anmeldetag: 09.02.1998
(51) Int. Cl.: B62B 1/20

(54) **Zerlegbare Schubkarre**

(30) Priorität: 14.02.1997 DE 29702595 U
(71) Anmelder: Mefro Metallwarenfabrik Fischbacher GmbH, 83101 Rohrdorf (DE)
(72) Erfinder: Fischbacher, Alfred Dr., D-83101 Rohrdorf (DE)
(74) Vertreter: Schieschke, Klaus, Dipl.-Ing.

(57) **Zusammenfassung**

Die Erfindung bezieht sich auf eine zerlegbare Schubkarre mit zwei getrennt voneinander ausgebildeten, mit Stützfüßen (3, 3') versehenen Tragholmen (2, 2'), welche an ihren vorderen Enden (8, 8') ein Laufrad (4) lagern und mit einer an den Tragholmen (2, 2') befestigten Aufnahmemulde (10), wobei im Bereich der Stützfüße (3, 3') zwischen den beiden Tragholmen (2, 2') ein mit diesen (2, 2') und mit der Aufnahmemulde (10) verbundener Verbindungsrahmen (12) angeordnet ist.

## Beschreibung

Die Erfindung bezieht sich auf eine zerlegbare Schubkarre mit zwei getrennt voneinander ausgebildeten, mit Stützfüßen versehenen Tragholmen, welche an ihren vorderen Enden ein Laufrad lagern und mit einer an den Tragholmen befestigten Aufnahmemulde.

Als Stand der Technik ist bereits eine derartige zerlegbare Schubkarre bekannt, bei welcher die beiden Tragholmen einen X-förmig ausgebildeten, gegeneinander gerichteten Bereich aufweisen, in welchem sie durch ein Zwischenelement verbunden sind (DE 33 08 739 A1). Das Zwischenelement kann als Schraub-, Steck- oder Klemmverbindung gestaltet sein. Die Aufnahmemulde ist auf einem Bereich der Tragholme aufgeschraubt. Die Stützfüße sind jeweils an die Tragholme angeschweißt.

Weiterer Stand der Technik ist eine zerlegbare Schubkarre (DE-PS 863 004), bei welcher die beiden Tragholme im Bereich des Laufrades durch ein gabelförmiges Gestell miteinander verbunden sind. Die beiden Holme können jeweils um ihre Lagerstelle im Gestell schwenken. Durch diese Schwenkmöglichkeit der getrennt voneinander ausgebildeten Holme lassen sich diese scherenförmig spreizen und damit einen Behälter aufnehmen oder - bei fehlendem Behälter - zusammenklappen und raumsparend transportieren. Diese bekannte Anordnung ist relativ kompliziert aufgebaut, weist nur eine ungenügende Stabilität auf und bedarf einer kostenaufwendigen Fertigung.

Weiterhin ist ein Schubkarrenunterrahmen bekannt (DE-GM 79 30 503), welcher so ausgebildet ist, dass die beiden Tragholme aus je einem gebogenen Stabteil bestehen, deren vordere Enden mit den Schenkeln eines Bügelstückes lösbar zusammengesteckt sind. Es ergibt sich damit eine relativ instabile Konstruktion, welche nicht zum Transport großer Lasten geeignet ist.

Zum Stand der Technik zählt darüber hinaus eine zerlegbare Schubkarre, bei welcher die Tragholme zweigeteilt ausgebildet sind (DE-OS 19 40 445). An diese zweigeteilten Tragholme werden die Stützfüße angeschraubt, wonach die beiden Tragholme durch Querstege miteinander zu verbinden sind. Auf dieser so vormontierten Einheit wird die Aufnahmemulde befestigt. Die bekannte Schubkarre weist damit eine große Anzahl von Einzelteilen auf, ist entsprechend kostenaufwendig und bedarf zur Montage eines längeren Zeitaufwandes.

Bei einer anderen bekannten Schubkarre (DE-GM 18 60 478) ist ein Gestell aus zwei über Kreuz gebogenen Rohren gebildet, welche miteinander verschraubt, verschweißt oder vernietet sind. Auf diesem Rohrgestell wird die Aufnahmemulde befestigt. Wiederum ergibt sich eine relativ instabile Einheit, welche nicht zum Transport von hohen Lasten einsetzbar ist.

Zusätzlich ist eine Schubkarre bekannt (FR-PS 2,300,700), bei welcher zwei unabhängig voneinander ausgebildete Tragholme vorliegen, die im Mittelbereich durch eine teleskopartige Stange miteinander verbunden sind. Eine stabile Einheit wird erst durch Verschrauben mit der Aufnahmemulde erzielt.

Schließlich zählt eine weitere zerlegbare Schubkarre zum Stand der Technik (FR-PS 2,151,708), bei welcher die beiden Tragholme aus im Querschnitt verschiedenen Profilelementen bestehen, welche im Zusammenwirken mit der Aufnahmemulde eine funktionsfähige Einheit bilden.

Ausgehend von dem eingangs genannten Stand der Technik besteht die Aufgabe der vorliegenden Erfindung darin, eine zerlegbare Schubkarre zu schaffen, welche kostengünstig herstellbar ist und trotzdem auch zum Transport hoher Lasten herangezogen werden kann.

Diese Aufgabe wird erfindungsgemäß dadurch gelöst, dass im Bereich der Stützfüße zwischen den beiden Tragholmen ein mit diesen und mit der Aufnahmemulde verbundener Verbindungsrahmen angeordnet ist. Durch diesen Verbindungsrahmen ergibt sich trotz Zerlegbarkeit der Schubkarre eine stabile Einheit, welche schnell und einfach herstellbar und auch zum Transport hoher Lasten geeignet ist.

In weiterer Ausgestaltung der Erfindung kann der Verbindungsrahmen einstückig U-förmig mit zwei durch einen Querschenkel verbundenen Längsschenkeln ausgebildet sein. Diese Längsschenkel können am vorderen Ende jeweils mit dem Tragrahmen über Verbindungselemente verbunden werden. Durch die vorderen Verbindungselemente ist gleichzeitig die Aufnahmemulde mit den Tragholmen und den Längsschenkeln des Verbindungsrahmens zu verbinden.

Der Verbindungsrahmen kann jeweils zwischen dem hinteren Ende der Längsschenkel und dem Querschenkel einen Winkel zu den Längsschenkeln angeordnetem Verbindungsschenkel aufweisen. Hierbei sind in Draufsicht die vorderen Enden der Längsschenkel auf den Tragrahmen und die Verbindungsschenkel neben den Tragrahmen innenseitig angeordnet. Es finden Verbindungselemente Anwendung, welche beispielsweise als Schrauben-Muttern-Verbindung ausgebildet sind und die Tragholme mit dem Verbindungsrahmen und/oder der Aufnahmemulde verbinden. Die Tragholme und der Verbindungsrahmen können jeweils aus Metallrohren bestehen, wobei vorteilhafterweise die vorderen Enden der Tragholme jeweils zu einer flachen Lagerstelle für ein an dem Laufrad befestigtes Lagerelement umgeformt sind.

Vorteilhafte Weiterbildungen ergeben sich aus den zusätzlichen Unteransprüchen.

Die Erfindung wird nachfolgend anhand eines in der Zeichnung dargestellten Ausführungsbeispiels näher beschrieben. In der Zeichnung zeigen:
- Fig. 1: eine Seitenansicht der erfindungsgemäßen Schubkarre;
- Fig. 2: eine Unteransicht der erfindungsgemäßen Schubkarre nach Fig. 1;
- Fig. 3: eine Rückansicht der erfindungsgemäßen Schubkarre;
- Fig. 4: eine Ansicht gemäß IV in Fig. 2.

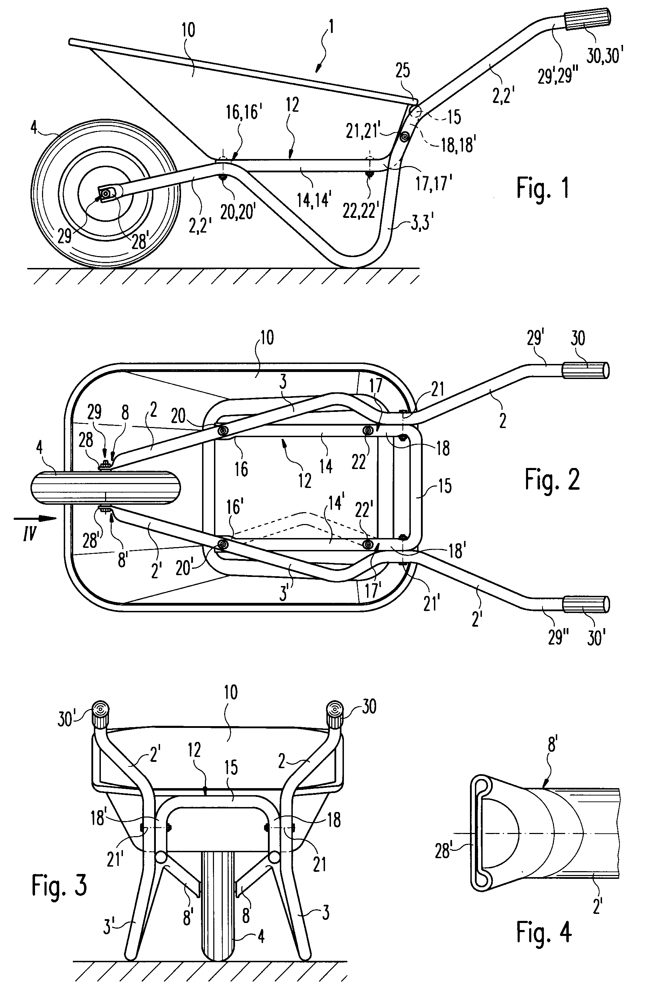

In den Zeichnungsfiguren ist eine zerlegbare Schubkarre 1 dargestellt, welche im Wesentlichen aus zwei getrennt voneinander ausgebildeten Tragholmen 2 und 2', einem Laufrad 4 sowie einem Verbindungsrahmen 12 und einer Aufnahmemulde 10 besteht. Einstückig mit den Tragholmen 2 und 2' sind Stützfüße 3, 3' vorgesehen. Gemäß Fig. 1 ist an den vorderen Enden 8, 8' der Tragholme 2 und 2' das Laufrad 4 befestigt. Die hinteren Enden 29' und 29'' der Tragholme 2 und 2' sind mit Handgriffen 30 und 30' versehen.

Insbesondere aus Fig. 2 und 3 geht hervor, dass im Bereich der Stützfüße 3 und 3' zwischen den beiden Tragholmen 2 und 2' der Verbindungsrahmen 12 angeordnet ist. Dieser Verbindungsrahmen 12 ist mit den Tragholmen 2 und 2' und mit der Aufnahmemulde 10 verbunden.

Wie aus Fig. 2 erkennbar, ist der Verbindungsrahmen 12 einstückig U-förmig ausgebildet und weist zwei durch einen Querschenkel 15 verbundene Längsschenkel 14 und 14' auf.

Nach Fig. 2 sind die Längsschenkel 14 und 14' am vorderen Ende 16 und 16' jeweils mit den Tragholmen 2 und 2' über Verbindungselemente 20 und 20' sowie 22 und 22' verbunden.

Aus Fig. 1 geht hervor, dass die vorderen Verbindungselemente 20 und 20' die Aufnahmemulde 10 gleichzeitig mit den Tragholmen 2 und 2' und mit den Längsschenkeln 14 und 14' des Verbindungsrahmens 12 verbinden.

Aus Fig. 1 und 3 ist ersichtlich, dass der Verbindungsrahmen 12 jeweils zwischen den hinteren Enden 17, 17' der Längsschenkeln 14 und 14' und dem Querschenkel 15 einen im Winkel zu den Längsschenkeln 14 und 14' angeordneten Verbindungsschenkel 18, 18' aufweist.

Die Längsschenkel 14, 14' und der Querschenkel 15 bilden nach Fig. 2 die Form eines (liegenden) U. Es besteht auch die Möglichkeit, die beiden Längsschenkel 14, 14' X-förmig (wie bei 14' strichliert dargestellt) einzuziehen, wodurch die Aufnahmemulde 12 am Boden eine bessere Auflage erfährt.

Fig. 2 lässt darüber hinaus erkennen, dass in Draufsicht die vorderen Enden 16, 16' der Längsschenkel 14, 14' auf den Tragholmen 2, 2' angeordnet sind, wohingegen die Verbindungsschenkel 18 und 18' innenseitig neben den Tragholmen 2, 2' liegen. Die Verbindungsschenkel 18 und 18' sind mit der Innenseite der Tragholme 2, 2' über Verbindungselemente 21 und 21' verbunden. Aus Fig. 1 ist ersichtlich, dass der Querschenkel 15 des Verbindungsrahmens 12 dicht unterhalb eines Abschlussflansches 25 der Aufnahmemulde 10 liegt. Die Verbindungselemente 21 und 21' liegen vorzugsweise im rechten Winkel zu den Verbindungselementen 20, 20' und 22, 22'.

Nach Fig. 1 verlaufen die Tragholme 2 und 2' im Bereich der Verbindungsschenkel 18, 18' parallel zu diesen. Die Tragholme 2 und 2' sind anschließend zwischen dem Bereich der Verbindungsschenkel 18 und 18' und den hinteren Enden 29 und 29' zweifach abgewinkelt.

Die Verbindungselemente 20 und 20' bzw. 21, 21' und 22, 22' sind vorteilhafterweise gesicherte Schrauben-Muttern-Verbindungen. Die Tragholme 2 und 2' und der Verbindungsrahmen 12 können jeweils aus Metallrohren bestehen.

Aus Fig. 3 und 4 geht hervor, dass die vorderen Enden 8, 8' der Tragholme 2 und 2' jeweils zu einer flachen Lagerstelle 28, 28' für ein mit dem Laufrad 4 befestigtes Lagerelement 29 umgeformt sind. Dieses Lagerelement 29 kann gemaß Fig. 2 aus einem Distanzrohr mit Schraube, Mutter und mindestens einer Unterlegscheibe bestehen.

Durch die besondere Gestaltung der zerlegbaren Schubkarre mit den beiden einstückigen Tragholmen 2 und 2', dem U-förmig ausgebildeten Verbindungsrahmen 12, dem Laufrad 4 und der Aufnahmemulde 10 ergibt sich eine einfach herstellbare, aber stabile Baueinheit, welche auch robusten Anforderungen genügt. Die Konstruktion erfordert vorteilhafterweise keinerlei Schweißnähte.

## Patentansprüche

1. Zerlegbare Schubkarre mit zwei getrennt voneinander ausgebildeten, mit Stützfüßen (3, 3') versehenen Tragholmen (2, 2'), welche an ihren vorderen Enden (8, 8') ein Laufrad (4) lagern und mit einer an den Tragholmen (2, 2') befestigten Aufnahmemulde (10)
**dadurch gekennzeichnet,**
dass im Bereich der Stützfüße (3, 3') zwischen den beiden Tragholmen (2, 2') ein mit diesen (2, 2') und mit der Aufnahmemulde (10) verbundener Verbindungsrahmen (12) angeordnet ist.

2. Schubkarre nach Anspruch 1,
**dadurch gekennzeichnet,**
dass der Verbindungsrahmen (12) einstückig U-förmig ausgebildet ist mit zwei durch einen Querschenkel (15) verbundenen Schenkeln (14, 14').

3. Schubkarre nach Anspruch 2,
**dadurch gekennzeichnet,**
dass die Längsschenkel (14, 14') des Verbindungsrahmens (12) jeweils am vorderen Ende (16, 16') mit den Tragholmen (2, 2') über Verbindungselemente (20, 20') verbunden sind.

4. Schubkarre nach Anspruch 3,
**dadurch gekennzeichnet,**
dass durch die vorderen Verbindungselemente (20, 20') gleichzeitig die Aufnahmemulde (10) mit den Tragholmen (2, 2') und den Längsschenkeln (14, 14') des Verbindungsrahmens (12) verbunden sind.

5. Schubkarre nach einem der vorhergehenden Ansprüche
**gekennzeichnet durch**
Verbindungselemente (22, 22') im mittleren Bereich der Längsschenkel (14, 14') zur weiteren Befestigung der Aufnahmemulde (10) an den Verbindungsrahmen (12).

6. Schubkarre nach einem oder mehreren der vorhergehenden Ansprüche,
**dadurch gekennzeichnet,**
dass der Verbindungsrahmen (12) jeweils zwischen den hinteren Enden (17, 17') der Längsschenkel (14, 14') und dem Querschenkel (15) einen im Winkel zu den Längsschenkeln (14, 14') angeordneten Verbindungsschenkel (18, 18') aufweist.

7. Schubkarre nach Anspruch 6,
**dadurch gekennzeichnet,**
dass in Draufsicht die vorderen Enden (16, 16') der Längsschenkel (14, 14') auf den Tragholmen (2, 2') und die Verbindungsschenkel (18, 18') neben den Tragholmen (2, 2') innenseitig angeordnet sind.

8. Schubkarre nach Anspruch 6 und 7,
**dadurch gekennzeichnet,**
dass die Verbindungsschenkel (18, 18') mit der Innenseite der Tragholme (2, 2') über Verbindungselemente (21, 21') verbunden sind.

9. Schubkarre nach einem oder mehreren der vorhergehenden Ansprüche,
**dadurch gekennzeichnet,**
dass der Querschenkel (15) des Verbindungsrahmens (12) dicht unterhalb eines Abschlussflanschs (25) der Aufnahmemulde (10) liegt.

10. Schubkarre nach Anspruch 6,
**dadurch gekennzeichnet,**
dass die Tragholme (2, 2') im Bereich der Verbindungsschenkel (18, 18') parallel zu diesem verlaufen.

11. Schubkarre nach einem oder mehreren der vorhergehenden Ansprüche,
**dadurch gekennzeichnet,**
dass die Tragholme (2, 2') zwischen dem Bereich der Verbindungsschenkel (18, 18') und hinteren, mit Handgriffen (30, 30') versehenen Enden (29, 29') mindestens einfach abgewinkelt sind.

12. Schubkarre nach einem oder mehreren der vorhergehenden Ansprüche,
**dadurch gekennzeichnet,**
dass die Verbindungselemente (20, 20'; 21, 21'; 22, 22') gesicherte Schrauben-Muttern-Verbindungen sind.

13. Schubkarre nach einem oder mehreren der vorhergehenden Ansprüche,
**dadurch gekennzeichnet,**
dass die Tragholme (2, 2') und der Verbindungsrahmen (12) jeweils aus Metallrohren bestehen.

14. Schubkarre nach Anspruch 13,
**dadurch gekennzeichnet,**
dass die vorderen Enden (8, 8') der Tragholme (2, 2') jeweils zu einer flachen Lagerstelle (28, 28') für ein an dem Laufrad (4) befestigtes Lagerelement (29) umgeformt sind.

15. Schubkarre nach Anspruch 14,
**dadurch gekennzeichnet,**
dass das Lagerelement (29) aus einem Distanzrohr mit Schraube, Muttern und Unterlegscheibe bestehen.

16. Schubkarre nach Anspruch 2,
**dadurch gekennzeichnet,**
dass die Schenkel (14, 14') X-förmig eingezogen sind.
